(19) Europäisches Patentamt
European Patent Office
Office européen des brevets

(11) **EP 1 894 067 B1**

(12) **FASCICULE DE BREVET EUROPEEN**

(45) Date de publication et mention
de la délivrance du brevet:
**19.01.2011 Bulletin 2011/03**

(21) Numéro de dépôt: **06743845.7**

(22) Date de dépôt: **25.04.2006**

(51) Int Cl.:
*G05B 19/19* (2006.01)    *B25J 9/16* (2006.01)

(86) Numéro de dépôt international:
**PCT/FR2006/050388**

(87) Numéro de publication internationale:
**WO 2006/131664 (14.12.2006 Gazette 2006/50)**

(54) **DISPOSITIF DE REGLAGE AUTOMATIQUE DES ASSERVISSEMENTS D'UN SIMULATEUR MECANIQUE DE MOUVEMENTS ET DISPOSITIF ASSOCIE**

EINRICHTUNG ZUM AUTOMATISCHEN JUSTIEREN DER SERVOSTEUERUNG EINES MECHANISCHEN BEWEGUNGSSIMULATORS UND SIMULATOR MIT SOLCHER EINRICHTUNG

DEVICE FOR AUTOMATICALLY ADJUSTING THE SERVO-CONTROLLER OF A MECHANICAL MOTION SIMULATOR AND SIMULATOR WITH SUCH A DEVICE

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **10.06.2005 FR 0551576**

(43) Date de publication de la demande:
**05.03.2008 Bulletin 2008/10**

(73) Titulaire: **Société Nouvelle Wuilfert**
**78160 Marly le Roi (FR)**

(72) Inventeur: **VAU, Bernard**
**F-92500 Rueil Malmaison (FR)**

(74) Mandataire: **Michelet, Alain et al**
**Cabinet Harlé et Phélip**
**7, rue de Madrid**
**75008 Paris (FR)**

(56) Documents cités:
**US-A1- 2002 111 758    US-A1- 2003 028 266
US-B1- 6 826 521**

• **LI D ET AL: "Modeling, simulation, and control of a hydraulic Stewart platform" ROBOTICS AND AUTOMATION, 1997. PROCEEDINGS., 1997 IEEE INTERNATIONAL CONFERENCE ON ALBUQUERQUE, NM, USA 20-25 APRIL 1997, NEW YORK, NY, USA,IEEE, US, vol. 4, 20 avril 1997 (1997-04-20), pages 3360-3366, XP010235479 ISBN: 0-7803-3612-7**
• **CHIACCHIO P ET AL: "ROBUST DESIGN OF INDEPENDENT JOINT CONTROLLERS WITH EXPERIMENTATIONON A HIGH-SPEED PARALLEL ROBOT" IEEE TRANSACTIONS ON INDUSTRIAL ELECTRONICS, IEEE SERVICE CENTER, PISCATAWAY, NJ, US, vol. 40, no. 4, 1 août 1993 (1993-08-01), pages 393-403, XP000395772 ISSN: 0278-0046**

EP 1 894 067 B1

**Description**

L'invention a pour domaine celui de l'asservissement du mouvement d'un simulateur de mouvements.

Un simulateur de mouvements est un ensemble comportant un dispositif mécanique et des unités électroniques et logicielles de contrôle du dispositif mécanique. Ce dernier comporte un plateau mobile destiné à recevoir une charge. Le plateau est apte à être déplacé en rotation autour d'un ou de plusieurs axes géométriques et/ou en translation le long d'un ou de plusieurs axes géométriques. Dans un référentiel cartésien, par exemple terrestre, la position du solide que constitue le plateau est donnée par la position de son centre de gravité et l'orientation d'un axe perpendiculaire au plan du plateau.

Un simulateur de mouvements peut être un positionneur embarqué pour positionner une charge utile donnée.

Un simulateur de mouvements peut également être un banc d'essai pour tester une charge, telle qu'un système inertiel à tester, lors d'une séquence de mouvements commandés. Le plateau est alors mis en mouvement selon une séquence prédéterminée comportant une succession temporelle de positions de consigne. A chaque instant, les paramètres cinématiques du plateau dérivant de consigne en position peuvent être comparés aux paramètres cinématiques mesurés par le système inertiel à tester.

Afin que le plateau suive de façon précise les consignes de position, il est indispensable d'avoir recours à une boucle d'asservissement en position du plateau.

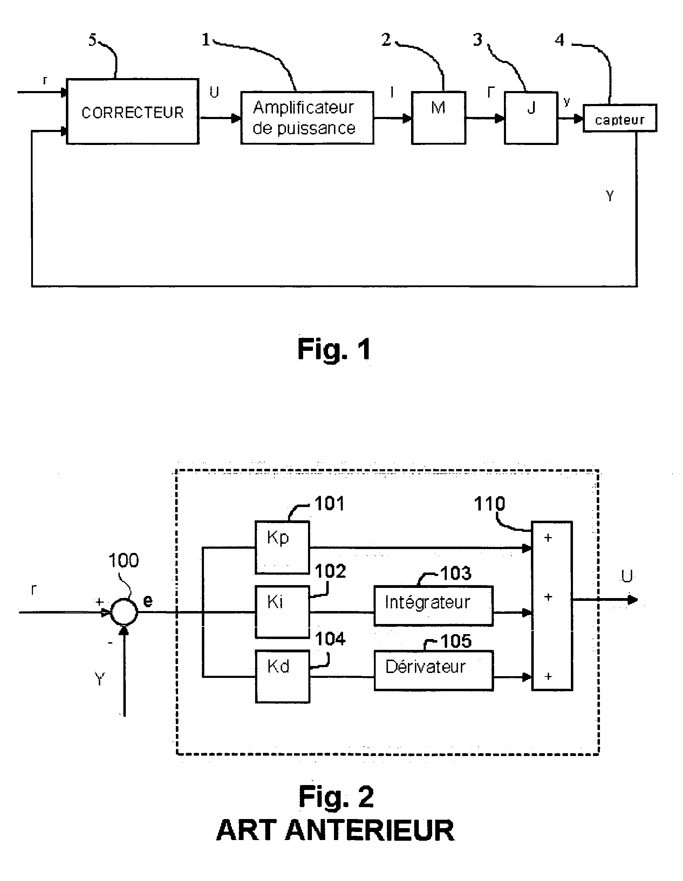

Sur la figure 1, on a représenté un schéma général d'une boucle d'asservissement d'un simulateur de mouvements selon un axe de rotation. La partie mécanique de cette boucle d'asservissement comprend : le plateau et sa charge montés sur un axe mécanique, le système mécanique 3 ainsi formé ayant un moment d'inertie J par rapport à son axe de rotation ; le moteur 2 ; l'amplificateur de puissance 1 ; et, un capteur de position 4. L'amplificateur de puissance 1, en réponse au signal de commande U, émet en sortie un courant I dont l'amplitude et l'étape permettent de contrôler le mouvement du moteur 2. Le moteur 2 génère un couple $\Gamma$ permettant de mettre en rotation le système mécanique 3. Le capteur 4 mesure, à chaque instant, la position effective y du plateau 3 et émet, en sortie, un signal de mesure donnant une mesure Y de la position du plateau 3.

D'une manière générale, l'asservissement d'une machine tournante consiste à créer une rétroaction à partir de la mesure Y d'une grandeur y telle que la position, la vitesse, etc. Le but de cette rétroaction est de permettre un suivi effectif de la grandeur de consigne r. Un bloc de correction ou correcteur 5 est défini de manière générique comme un composant apte à émettre un signal de commande U en fonction de la consigne r et de la mesure Y de sorte que, pour une valeur donnée de la consigne r, la valeur mesurée Y converge vers cette valeur de la consigne.

Selon l'art antérieur, le correcteur d'asservissement le plus fréquemment utilisé est du type PID (proportionnel, intégral, dérivé) dont le principe est décrit sur la figure 2. Sur cette figure, à l'étape 100, on réalise d'abord la soustraction de la mesure Y à la consigne r. En sortie de l'étape 100, on obtient un écart e. L'écart e est multiplié par une constante $K_P$ à l'étape 101, et le résultat obtenu est acheminé en entrée d'un sommateur 110. Parallèlement, à l'étape 102, l'écart e est multiplié par une constante $K_I$, puis le résultat obtenu est intégré par rapport au temps à l'étape 103. En sortie de l'étape 103, le résultat est appliqué en entrée du sommateur 110. Parallèlement, à l'étape 104, l'écart e est multiplié par la constante $K_D$, puis dérivé par rapport au temps au cours de l'étape 105. Le résultat de l'étape 105 est émis en direction de l'entrée du sommateur 110. Enfin, le sommateur 110 effectue la somme des différentes grandeurs qui lui parviennent pour produire en sortie le signal de commande U qui est donc de la forme :

$$U = K_P e + \int K_I e \, dt + d(K_D e)/dt \;,$$

où les coefficients $K_P$, $K_I$ et $K_D$ sont ajustés de sorte que l'écart e tende le plus rapidement possible vers zéro lors d'un changement de la valeur de la consigne r.

Deux notions principales permettent de caractériser l'asservissement d'une machine tournante :

- La robustesse : il s'agit de l'insensibilité du correcteur aux incertitudes de la modélisation physique de la machine à commander. Dans le cas spécifique d'un simulateur de mouvements, il faut que le correcteur soit robuste par rapport à la variation du moment d'inertie du système mécanique 3 lors du changement de la charge. En effet, un simulateur de mouvements servant à tester différentes charges, le moment d'inertie J du système mécanique est inévitablement modifié lors du changement de la charge. On dira qu'un correcteur est robuste lorsqu'il garantit la stabilité de la boucle d'asservissement fermée en cas de variation d'un ou de plusieurs paramètres physiques de la machine à réguler. Dans le cas d'un simulateur de mouvements ce paramètre est le moment d'inertie. Pour mémoire, la stabilité est l'aptitude du système asservi à se comporter de telle sorte que l'écart e tende vers une valeur finie lorsque la consigne r est modifiée. Mais, la convergence de la variable e peut se faire au bout d'un temps très élevé. C'est pourquoi il est également nécessaire d'introduire la notion de performance pour caractériser un asservissement.

- La performance : il s'agit de la dynamique de suivi de la consigne r et de la dynamique de rejet des perturbations pouvant affecter la machine. Dans le cas d'un simulateur de mouvements, les perturbations pouvant affecter le système sont, par exemple, constituées par un couple de freinage dû à des frottements non pris en compte.

D'un point de vue théorique, on montre que les objectifs de performance et de robustesse sont antagonistes. Si l'on souhaite des performances élevées, c'est-à-dire que le système rejette très rapidement les perturbations, cela se fait au détriment de la robustesse.

Pour les simulateurs de mouvements, la recherche d'une bande passante maximale conduit à privilégier la performance du système par rapport à sa robustesse. En générale, la robustesse est relativement faible ce qui nécessite d'adapter le correcteur pour chaque charge.

Ainsi, les paramètres du correcteur utilisé, par exemple les gains $K_P$, $K_I$ et $K_D$ du correcteur du type PID représenté sur la figure 2, doivent être réglés à chaque changement de la charge.

Selon l'art antérieur, dans le domaine des simulateurs de mouvements, le réglage du correcteur est fait « manuellement » par l'intervention d'un technicien en charge du simulateur de mouvements à chaque fois que la charge du simulateur est modifiée. Ce réglage est coûteux en temps et est empirique. En effet, il nécessite de nombreux tests du type essai-erreur pour trouver la valeur des gains adaptés car les paramètres de réglage du PID sont dépendants les uns des autres. De plus, il est difficile de garantir que le réglage obtenu corresponde au réglage optimum du système. Si la boucle d'asservissement fonctionne avec un correcteur mal paramétré, le risque pour que la boucle fermée ne soit pas stable n'est pas nul.

Des procédures pour régler automatiquement un correcteur sont connues dans d'autres domaines techniques que celui des simulateurs de mouvements.

Une technique consiste à réaliser un ajustement automatique en temps réel des paramètres du correcteur destiné à asservir une machine tournante au cours de l'utilisation de cette dernière. Cette technique, connue sous le nom de commande auto-adaptative (« self control »), n'est pas transposable au cas des simulateurs de mouvements car elle est d'une grande complexité notamment puisqu'il s'agit de respecter la contrainte d'ajustement en « temps réel » du correcteur. De plus, il ne peut y avoir de connaissance précise du mouvement puisque les paramètres du correcteur sont modifiés à chaque instant. Ceci est particulièrement vrai lors du début d'une séquence de mouvements, lorsque l'on vient de changer la charge et que la mise en oeuvre de la procédure de réglage modifie sans cesse les gains.

Une autre technique utilisée dans le domaine des machines tournantes consiste à réaliser une étape initiale d'essai au cours de laquelle on règle le correcteur. Le réglage automatique d'un correcteur se fait en respectant le processus suivant :

- Excitation du système avec un stimulus (changement du courant appliqué sur le moteur) ;
- Acquisition de la réponse de ce système à l'excitation appliquée ;
- Utilisation des données obtenues pour constituer un modèle mathématique du système (sous forme de fonction de transfert ou de modèle d'état) ; et,
- Utilisation du modèle obtenu pour synthétiser le correcteur.

Mais, la plupart du temps l'excitation est effectuée en boucle ouverte, c'est-à-dire sans rétroaction. L'utilisateur ne sait donc pas, a priori, quel va être l'accélération, la vitesse ou le débattement (excursion en position de l'axe) du mouvement.

Dans le cas d'un simulateur de mouvements, un tel essai n'est pas possible en particulier car, lors de l'étape d'excitation du système, des contraintes telles que les valeurs maximales de l'accélération, de la vitesse et de la position ne doivent pas être dépassées sous peine de détériorer l'appareil. Il est donc indispensable que cet essai se fasse de façon contrôlée, c'est-à-dire avec une rétroaction permettant d'éviter la violation des contraintes.

Jouve et al. [Autotuning of axis control systems for robots and machine tools IEEE 1991] ont proposé une méthode permettant d'effectuer une étape initiale d'essai en boucle fermée dans le cas d'une machine tournante qui est une machine outils équipée d'un capteur de vitesse. Il s'agit donc d'une boucle d'asservissement en vitesse.

Cette solution n'est pas applicable au cas des simulateurs de mouvements qui sont équipés de capteurs de position, extrêmement précis, et rarement de capteurs de vitesse, soit coûteux, soit bruités et peu précis.

L'utilisation d'une boucle d'asservissement en vitesse, en utilisant un capteur de vitesse, ne permettrait pas de respecter les contraintes sur la position du mouvement lors de l'étape d'essai. En effet, la position ne serait alors connue qu'à une constante d'intégration près. Cette incertitude sur la valeur de la constante implique que l'on ne sait pas où le mouvement va débuter et/ou finir, ce qui peut entraîner le franchissement de butées et endommager le simulateur de mouvements.

Par ailleurs, l'article de Jouve et al. divulgue une méthode qui est en fait spécifique aux machines outils. En effet, ces dernières fonctionnent à des vitesses élevées, de plus de 5000 tours/mn, qui sont à comparer aux vitesses maximales d'environ 500 tours/mn, de fonctionnement des simulateurs de mouvements. Or la méthodologie décrite ne peut être utilisée à faible vitesse, i.e. en dessous d'un seuil de vitesse, sans que l'étape d'identification ne soit biaisée par des phénomènes non-linéaires.

Enfin, l'article de Jouve et al. divulgue implicitement l'utilisation d'un correcteur PI à faible gain pour l'étape initiale d'essai. Or dans le cas d'un simulateur de mouvements, des gains trop faibles d'un correcteur PID (le PI n'étant pas adapté à une boucle de position) peuvent avoir pour conséquence que l'on aboutisse à une boucle fermée instable.

Li et al. [Modeling, simulation and control of a hydraulic Stewart platform, IEEE 1997, XP010235479] ont proposé une méthode de commande d'une plateforme Stewart destinée à être utilisée comme simulateur de mouvements. Les équations dynamiques de la plateforme sont dérivées du principe de travail virtuel, un contrôleur robuste et performant est proposé mais l'identification en-ligne des paramètres d'un tel contrôleur robuste n'est pas envisagé.

Il y a donc un besoin pour un procédé de réglage automatique d'une boucle d'asservissement en position pour le cas d'un simulateur de mouvements. Il y a également un besoin pour que ce procédé de réglage automatique permette d'obtenir rapidement le compromis performance/robustesse souhaité en fonction d'une charge donnée.

Pour cela l'invention a pour objet un procédé de réglage mis en oeuvre dans un simulateur de mouvement pouvant embarquer une charge, le simulateur comportant un dispositif mécanique et une unité de contrôle, le dispositif mécanique comportant des moyens d'entraînement pour mettre en mouvement un plateau apte à porter la charge ; un amplificateur de courant apte à actionner les moyens d'entraînement en réponse à un signal de commande ; un capteur apte à mesurer une position et l'unité de contrôle comportant un correcteur apte à émettre le signal de commande en fonction d'un signal de consigne et de la grandeur mesurée.

Le procédé selon l'invention se caractérise en ce qu'il permet de régler automatiquement le correcteur pour asservir selon la position du mouvement du dispositif mécanique embarquant une charge donnée, le procédé comportant :

- une étape initiale de synthèse d'un correcteur robuste, la synthèse étant fondée sur une première modélisation physique du dispositif mécanique comportant au moins un paramètre d'inertie, le correcteur robuste obtenu permettant l'asservissement du dispositif mécanique sur une plage de valeur du paramètre d'inertie s'étendant entre un paramètre d'inertie minimum et un paramètre d'inertie maximum ; et, après avoir positionné la charge donnée sur le plateau,
- une étape de test au cours de laquelle le dispositif mécanique, asservi au moyen du correcteur robuste déterminé lors de l'étape initiale, est actionné selon un profil de consigne de position prédéfini respectant des contraintes sur l'accélération, la vitesse et la position du mouvement, le signal de commande et la position mesurée étant mémorisés à chaque instant en tant que données de l'étape de test ;
- une étape d'identification qui, à partir des données de l'étape de test, permet de déterminer la valeur d'une pluralité de paramètres physiques d'une deuxième modélisation du dispositif mécanique embarquant la charge donnée, la pluralité de paramètres physiques comportant au moins le paramètre d'inertie ; et,
- une étape finale de synthèse d'un correcteur optimal adapté à la charge donnée, dans laquelle le paramètre d'inertie prend la valeur du paramètre d'inertie déterminé lors de l'étape d'identification.

De préférence, le dispositif mécanique est apte à mettre le plateau embarquant une charge au moins en translation le long d'un axe, le paramètre d'inertie étant alors une masse d'inertie.

De préférence, le dispositif mécanique est apte à mettre le plateau embarquant une charge au moins en rotation autour d'un axe, le paramètre d'inertie étant alors un moment d'inertie.

De préférence, lors de l'étape initiale, le correcteur est dans une boucle d'asservissement fermée sur une simulation numérique du dispositif mécanique embarquant une charge ayant un paramètre d'inertie nominal dans la plage.

De préférence, l'ensemble des étapes de test, d'identification et finale sont exécutées à nouveau au moins à chaque changement de charge.

De préférence, la première modélisation est une modélisation linéaire du comportement dynamique du dispositif mécanique.

De préférence, les correcteurs robuste et optimal sont synthétisés avec une méthodologie de type LQG-H2 (optimisation du correcteur suivant un critère quadratique) comportent un filtre de Kalman basé sur la première modélisation, le filtre de Kalman prenant, en entrée, le signal de commande, la grandeur mesurée et la consigne pour générer, en sortie, un état estimé du dispositif mécanique, l'état estimé étant appliqué en tant que signal de commande après avoir été multipliée par un vecteur dit vecteur de retour d'état.

De préférence, le filtre de Kalman permet d'estimer les perturbations affectant le dispositif mécanique en les modélisant par un signal venant s'additionner au signal de commande à l'entrée du dispositif mécanique à asservir.

De préférence, la synthèse des correcteurs robuste et optimal est faite au moyen d'une méthodologie dite de contrôle d'état standard.

De préférence, les correcteurs robuste ou optimal comportent quatre paramètres de réglage scalaires de haut niveau.

De préférence, l'étape initiale comporte d'abord, en faisant varier un premier paramètre scalaire parmi les paramètres scalaires, la recherche d'un correcteur ayant une marge de module supérieure à une marge de module seuil pour toutes les valeurs de moment d'inertie de la plage de moment d'inertie, puis, en faisant varier un autre paramètre scalaire, dit deuxième paramètre, parmi les paramètres scalaires, la recherche d'un correcteur ayant une marge de retard supérieure à une marge de retard seuil pour toutes les valeurs de moment d'inertie de la plage de moment d'inertie.

De préférence, la valeur du moment d'inertie ayant été identifiée, l'étape finale comporte d'abord, en faisant varier le deuxième paramètre, la recherche d'un correcteur ayant une marge de retard supérieure à la marge de retard seuil, puis, en faisant varier encore un autre paramètre scalaire, dit troisième paramètre, parmi les quatre paramètres scalaires, la recherche d'un correcteur optimal ayant une marge de module supérieure à la marge de module seuil.

De préférence, lors de l'étape d'identification, la deuxième modélisation est une modélisation linéaire du comportement du dispositif.

De préférence, lors de l'étape d'identification, la deuxième modélisation tient compte de manière explicite des forces conduisant à un comportement non linéaire du dispositif.

De préférence, le procédé comporte, à l'issue de l'étape de test, une étape de prétraitement pour rejeter les données pour lesquelles la valeur correspondante de la vitesse du plateau est inférieure à une vitesse seuil.

Afin de réaliser un test d'excitation en boucle fermée de position, il est nécessaire de concevoir préalablement à cet essai une loi de commande ou correcteur permettant d'assurer la stabilité du simulateur de mouvements quelque soit l'inertie de la charge posée sur le plateau de la machine, la stabilité se caractérisant par une réponse finie du système à une variation de la consigne (absence d'oscillations ou de divergence de la position de l'axe par rapport à la consigne).

Le fait d'utiliser un asservissement en position fonctionnant avec un capteur de position permet de respecter de façon certaine les contraintes d'excursion du plateau et de ne pas risquer la détérioration du simulateur de mouvements. De ce point de vue, l'invention présente l'avantage d'être sûre.

De plus l'invention présentée ici utilise une modélisation de l'axe à asservir. Or certaines forces perturbatrices agissant sur l'axe, dépendent explicitement de la position (balourd), ce qui nécessite la connaissance en absolu de cette position pour élaborer le modèle de l'axe.

La structure du correcteur utilisé selon l'invention ainsi que la méthodologie pour le synthétiser dépendent de l'application particulière au cas des simulateurs de mouvements.

De plus, à partir du moment où l'on utilise un asservissement en position, la synthèse du correcteur robuste utilisé est plus complexe. Par exemple, la synthèse d'un correcteur PI à gain faible, comme celui implicitement décrit dans l'article de Jouve et al., n'est pas suffisant. Avantageusement, le correcteur robuste de type LQG-H2 est synthétisé par une méthodologie dite de contrôle d'état standard.

Enfin, le procédé selon l'invention est particulièrement simple d'utilisation. Il présente l'avantage de pouvoir être mis en oeuvre par l'utilisateur final du simulateur de mouvements qui ne doit donc plus forcément être un automaticien spécialiste du réglage de la boucle d'asservissement. L'utilisateur final a simplement à spécifier par exemple les marges de retard et de module à atteindre et à lancer la procédure automatique de synthèse du correcteur optimal.

L'invention a également pour objet un simulateur de mouvements apte à embarquer une charge, le simulateur de mouvements comportant un dispositif mécanique et une unité de contrôle, le simulateur comportant un plateau mobile apte à porter la charge ; des moyens d'entraînement apte à mettre en mouvement selon au moins un axe le plateau ; un amplificateur de courant apte à actionner les moyens d'entraînement en réponse à un signal de commande ; un capteur apte à mesurer une position du plateau ; l'unité de contrôle comportant un correcteur apte à émettre le signal de commande en fonction d'un signal de consigne et de la position mesurée, **caractérisé en ce que** l'unité de contrôle est configurée pour mettre en oeuvre l'un des procédés de réglage ci-dessus pour obtenir un correcteur optimal étant donnée une charge.

Dans un premier mode de réalisation, le simulateur de mouvements est un positionneur embarqué, la charge donnée étant une charge utile.

Dans un deuxième mode de réalisation le simulateur de mouvements est un banc d'essai, la charge donnée étant une charge à tester.

L'invention sera mieux comprise et d'autres buts, détails, caractéristiques et avantages de celle-ci apparaîtront plus clairement au cours de la description d'un mode de réalisation particulier de l'invention donné uniquement à titre illustratif et non limitatif en référence aux dessins annexés. Sur ces dessins :

La figure 1 est un schéma général d'une boucle d'asservissement d'un simulateur de mouvements ;
La figure 2 est un schéma général d'un correcteur selon l'art antérieur du type PID pour une mise en oeuvre dans la boucle d'asservissement de la figure 1 ;

La figure 3 est un schéma-bloc représentant le principe de la méthodologie dite de contrôle d'état standard au moyen d'un correcteur intégrant un filtre de Kalman et un retour sur un état estimé du dispositif mécanique, utilisé dans le procédé selon l'invention ;

La figure 4 est un diagramme représentant, sous la forme d'un algorithme, l'étape initiale du procédé selon l'invention permettant d'obtenir un correcteur robuste vis-à-vis des paramètres du système à contrôler ;

La figure 5 représente de manière schématique la boucle d'asservissement dans l'étape de test du procédé selon l'invention ;

La figure 6 est un graphe représentant la position correspondant à la consigne appliquée en entrée du correcteur de la figure 5 au cours de l'étape de test ;

La figure 7 est un diagramme représentant, sous la forme d'un algorithme, l'étape du procédé selon l'invention permettant la détermination d'un correcteur optimal adapté à la charge.

Le procédé selon l'invention permet le réglage automatique d'une boucle d'asservissement d'un simulateur de mouvements adaptée à une nouvelle charge. Plus particulièrement, le procédé selon l'invention permet d'obtenir rapidement, de l'ordre de la minute, le correcteur optimal à la nouvelle charge présentant le compromis performances/robustesse souhaité. Par réglage automatique, il faut comprendre un réglage ne nécessitant pas l'intervention d'un technicien, et qui peut se faire, par exemple, au moyen d'un calculateur apte à réaliser les différentes étapes du procédé selon l'invention en exécutant les instructions d'un programme mémorisé dans des moyens de mémorisation adaptés.

De manière schématique, le procédé selon l'invention permet la synthèse de correcteurs adaptés au problème. Ces correcteurs sont réglables au moyen d'un certain nombre de paramètres. Au cours des différentes étapes du procédé selon l'invention, les valeurs de ces paramètres sont ajustées de manière à déterminer un correcteur particulier qui réponde au compromis recherché lors de cette étape.

L'étape initiale du procédé selon l'invention a pour but de conduire à la détermination d'un correcteur robuste pour le système mécanique à asservir. Pour ce faire, il est nécessaire d'utiliser une première modélisation physique du comportement du dispositif mécanique.

Cette première modélisation est une modélisation linéaire d'un système qui correspond à la partie mécanique du dispositif mécanique intervenant dans la boucle d'asservissement. L'axe du simulateur de mouvements est commandé par un moteur du type à courant continu ou synchrone autopiloté (« brushless »). Ce moteur est lui-même commandé en courant. En négligeant la dynamique électrique des bobinages du moteur, le couple $\Gamma$ (mesuré en N.m) généré par le moteur est proportionnel à l'intensité I (en A) du courant appliqué : r = $Kt \cdot I$

Le facteur de proportionnalité est appelé constante de couple $K_t$. Le système considéré obéit à la loi fondamentale de la dynamique :

$$\frac{d\Omega}{dt} = -\frac{f}{J} \cdot \Omega + \frac{K_t}{J} \cdot I$$

$$\frac{d\theta}{dt} = \Omega$$

Expression dans laquelle J (en kg.m²/rad) est le moment d'inertie du système (et donc de la charge portée par le plateau du simulateur de mouvements) ; f (exprimé en N.m/rad) est un coefficient de frottement visqueux ; $\Omega$ (en rad/s) est la vitesse de rotation du plateau ; et, $\theta$ (en rad) est la position instantanée du plateau. Il est courant de chercher à exprimer cette modélisation selon les états dans lesquels peut se trouver le système à asservir. En posant $x$ l'état instantané du système ; $U \equiv I$ le signal de commande appliqué en entrée du système mécanique à contrôler ; et, $y \equiv \theta$ la grandeur à contrôler, les équations ci-dessus peuvent être écrites sous la forme d'un système d'équations dites équations d'état :

$$\dot{x} = \frac{dx}{dt} = A \cdot x + B \cdot U$$

$$y = C \cdot x$$

Avec

$$x = \begin{pmatrix} \Omega \\ \theta \end{pmatrix} \text{ et } A = \begin{pmatrix} \dfrac{-f}{J} & 0 \\ 1 & 0 \end{pmatrix}, \; B = \begin{pmatrix} \dfrac{Kt}{J} \\ 0 \end{pmatrix},$$

et C = (0 1)

Le correcteur selon l'invention est fondé sur un correcteur par exemple de type LQG-H2 dit LQG. La synthèse d'un tel correcteur est effectuée par exemple à l'aide de la méthodologie du contrôle d'état standard. Cette méthodologie est décrite, par exemple, dans l'ouvrage de M Philippe de Larminat intitulé « contrôle d'état standard » publié en 2000 aux éditions HERMES. En variante à la méthodologie du contrôle d'état standard, la méthodologie de placement de pôles robuste pourrait par exemple être utilisée. Cette méthodologie est décrite dans l'ouvrage de Philippe de Larminat intitulé « automatique : commande des systèmes linéaires » aux éditions HERMES. Le correcteur aurait alors une forme polynomiale et serait de structure RST qui est la forme la plus générale des correcteurs commandant des systèmes possédant une variable de commande et une variable mesurée. Il est également possible d'implémenter le correcteur LQG sous forme RST.

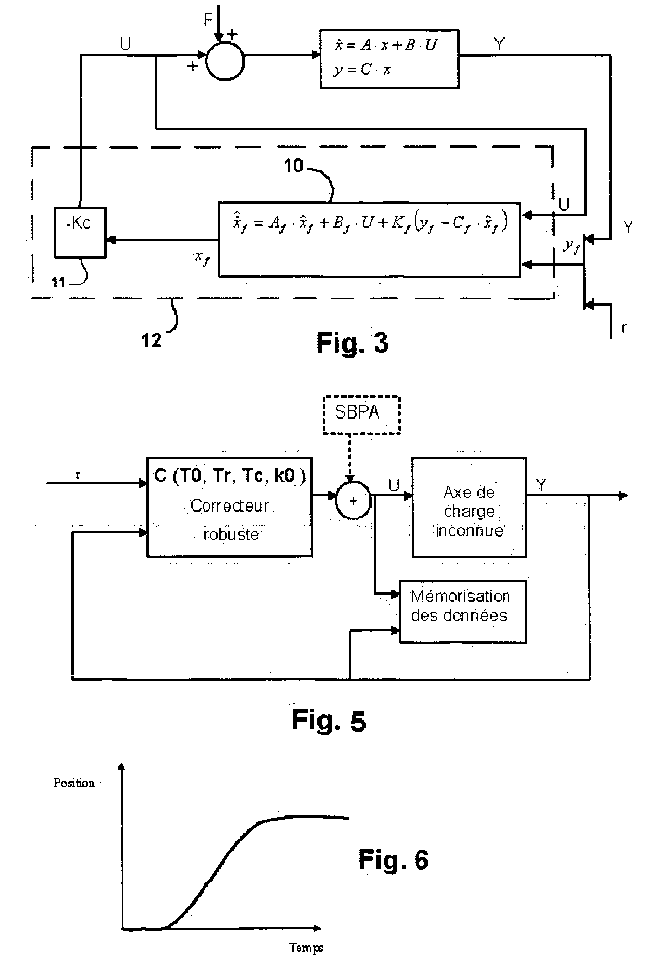

Comme cela est représenté schématiquement sur la figure 3, cette méthodologie fait appel à une boucle d'asservissement dans laquelle le correcteur 12 comporte lui-même un filtre de Kalman 10. Le filtre de Kalman 10 prend en entrée le signal de commande U et le vecteur $y_f$ contenant la position mesurée Y et la consigne r. Le vecteur $\hat{x}_f$ correspondant à l'état estimé du système par le filtre 10, sert de signal de commande U après avoir été multipliée par un vecteur ligne - Kc, dit vecteur de retour d'état (bloc 11 sur la figure 3). Le filtre de Kalman 10 permet, en quelque sorte, d'estimer l'état du système compte tenu de la modélisation du système et des grandeurs d'entrée (U) et de sortie (Y) effectivement appliquées au dispositif mécanique.

Avantageusement, l'ensemble filtre de Kalman 10 et vecteur de retour d'état permet de rejeter les perturbations qui peuvent modifier le comportement du système.

Lors de l'étape initiale, la boucle d'asservissement est fermée sur une simulation numérique du système réel. Cette simulation numérique est également fondée sur les équations de la dynamique mentionnées ci-dessus. Le système ayant été simulé par des équations linéaires, les couples perturbateurs sont simulés en introduisant une perturbation F appliquée sur l'entrée du système. Alors, le vecteur $\hat{x}_f$ de l'état estimé du système, possède une composante qui est une estimation de la perturbation F.

Les matrices Kc et Kf du filtre de Kalman 10 sont calculées de sorte que la boucle d'asservissement amène le système vers un état stable.

Les paramètres permettant de régler le correcteur obtenu selon la méthodologie du contrôle d'état standard sont la matrice *Kf* et le vecteur ligne *Kc*, dont la synthèse se fait par minimisation d'un critère quadratique.

Avantageusement, le correcteur est exprimé non pas au moyen des paramètres *Kf* et *Kc,* dits de bas niveau, mais au moyen des quatre paramètres scalaires suivants, dits de haut niveau :

- Un premier paramètre To est un paramètre essentiel, qui permet de gérer un compromis entre le choix d'une dynamique de rejet des perturbations à haute fréquence et une grande marge de retard ;
- Un deuxième paramètre Tc permet d'arbitrer un compromis entre la marge de module et l'excitation de la commande ;
- Un troisième paramètre Tr permet de régler la dynamique de suivi de la consigne ;
- Un quatrième paramètre Ko est un facteur de forme permettant de renforcer la robustesse de la boucle d'asservissement (au détriment de la dynamique de rejet des perturbations).

Un tel correcteur permet d'arbitrer facilement les compromis qui interviennent inévitablement dans n'importe quelle technique de synthèse d'un correcteur particulier. Un correcteur PID n'offre pas une telle possibilité car chacune des actions de réglage d'une des constantes $K_I$, $K_D$ ou $K_P$ est couplée avec les deux autres.

Une étape initiale du procédé selon l'invention est réalisée en usine lors de la fabrication du simulateur de mouvements. Cette étape initiale permet de déterminer les paramètres d'un correcteur qui est robuste aux variations de moment d'inertie de l'axe à commander. Plus précisément, l'étape initiale conduit à un correcteur garantissant la stabilité de l'axe pour toute une plage de moments d'inertie possibles entre un moment d'inertie minimum Jmin correspondant au moment d'inertie de l'axe à vide et un moment d'inertie maximum Jmax correspondant au moment d'inertie de l'axe pour une charge maximale. Le rapport des moments d'inertie maximum Jmax et minimum Jmin peut, par exemple, atteindre un facteur 10. Les moments d'inertie maximum Jmax et minimum Jmin peuvent être évalués lors de la conception du simulateur de mouvements, par exemple au moyen des outils de CAO classiquement utilisés.

Le moment d'inertie nominal Jnom retenu pour la synthèse d'un correcteur robuste au moyen de la méthodologie du contrôle d'état standard est telle que l'on ait :

$$Jnom = \sqrt{J\min \cdot J\max}$$

Les frottements visqueux f qui apparaissent dans la modélisation physique ne peuvent pas être connus aisément par le calcul. C'est la raison pour laquelle la valeur nulle est affectée à la valeur du coefficient de frottement visqueux f. Il est à souligner que ce cas correspond au cas le plus défavorable puisque les phénomènes dissipatifs ont globalement un effet stabilisant.

La modélisation, dite nominale, utilisée pour la synthèse du correcteur robuste se réduit donc aux équations d'état :

$$\frac{d\Omega}{dt} = \frac{K}{J} \cdot U$$

$$\frac{d\theta}{dt} = \Omega$$

Cette équation d'état peut être enrichie de la dynamique de la boucle en courant (contenant entre autre l'amplificateur de courant) pour parfaire la modélisation et la performance du correcteur.

Dans ces expressions, K est un coefficient global d'amplification.

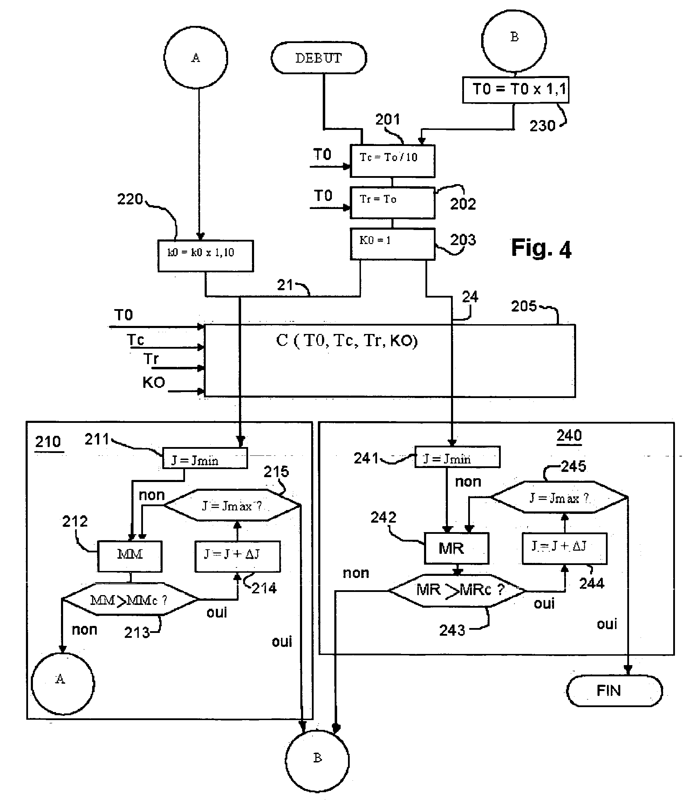

K peut être connu par le calcul sachant que la constante de couple du moteur et le gain de l'amplificateur sont connus par conception. Lors de l'étape initiale, le but de la synthèse est de trouver un correcteur robuste qui garantisse un niveau de marge statique et un niveau de marge dynamique corrects, et ceci quelle que soit la charge sur i'axe. L'algorithme 200 de la figure 4 représente la succession d'étapes élémentaires conduisant à la détermination d'un correcteur robuste.

Au début de l'algorithme 200, la valeur du paramètre To est prise arbitrairement faible. A l'étape 201, la valeur du paramètre Tc est prise comme égale à la valeur de To divisée par un facteur valant par exemple 10. A l'étape 202, la valeur du paramètre Tr est prise comme égale à celle de To. A l'étape 203, la valeur unité est affectée au paramètre Ko. D'une manière générale, le simulateur possède une unité électronique comportant des moyens de mémorisation et des moyens de calcul. Les instructions d'un programme apte à mettre en oeuvre tout ou partie du procédé selon l'invention sont stockées dans les moyens de mémorisation. Les valeurs instantanées des variables utilisées sont stockées dans un espace mémoire dont l'adresse est prédéfinie, et lues à partir de cet espace lorsque les moyens de calcul exécutent une instruction effectuant une opération utilisant cette variable.

Puis l'algorithme 200 se poursuit selon la direction indiquée par la ligne 21. Compte tenu de la valeur de chacun des paramètres To, Tc, Tr et Ko, un correcteur C est calculé à l'étape 205 au moyen de la méthodologie dite de contrôle d'état standard.

L'exécution du programme se poursuit par la boucle 210. La boucle 210 constitue une première partie de l'algorithme 200 au cours de laquelle on recherche un correcteur C assurant une marge de module MM supérieure à une valeur seuil de marge de module MMc pour toutes les configurations du système, c'est-à-dire pour toutes les valeurs du moment d'inertie J entre Jmin et Jmax. La valeur de marge de module seuil MMc a une valeur prédéfinie, valant par exemple 0,5.

La boucle 210 se déroule de façon itérative de la manière suivante : à l'étape 211, la valeur du moment d'inertie J est prise comme valant la valeur minimum Jmin. A l'étape 212, la marge de module MM du correcteur C déterminé à l'étape 205 est calculée compte tenu de cette valeur du moment d'inertie J. En sortie de l'étape 212, à l'étape 213, la valeur de la marge de module MM est comparée avec la marge de module seuil MMc.

Si la marge de module MM du correcteur C est inférieure à MMc, le programme 200 est orienté en A, vers l'étape 220 comme cela sera décrit ci-dessous. En revanche, si pour la valeur du moment d'inertie J, la marge de module MM est supérieure à la marge de module seuil MMc, alors la valeur du moment d'inertie est augmentée d'une valeur prédéfinie Δj, à l'étape 214. A l'étape 215, la nouvelle valeur du moment d'inertie J est comparée avec la valeur maximale Jmax. Si J est inférieur à Jmax, on calcule à nouveau la marge de module MM du correcteur C, compte tenu de la nouvelle valeur du moment d'inertie J en exécutant à nouveau l'étape 212. La boucle 210 a lieu tant que J est inférieur à la borne supérieure de la plage de moment d'inertie considérée comme pertinente. Dès que J est égal à Jmax, on sort en B de la boucle 210.

Si, à l'étape 213, la marge de module MM est inférieure à la marge de module seuil MMc, il faut construire un nouveau correcteur C. Pour cela, à l'étape 220, la valeur actuelle du paramètre Ko est multipliée par un facteur supérieur à l'unité, par exemple 1,1. Puis, un nouveau correcteur C est déterminé à l'étape 205. L'exécution du programme rentre à nouveau dans la boucle 210 pour vérifier si ce nouveau correcteur C satisfait la condition 213 pour toutes les valeurs du moment d'inertie J entre Jmin et Jmax. Dès qu'un tel correcteur C a été trouvé, le programme 200 passe dans une deuxième partie de l'algorithme 200 (point B).

Dans une deuxième partie de l'étape initiale, on recherche un correcteur assurant une marge de retard MR supérieure à une valeur seuil de marge de retard MRc pour toutes les configurations du système, c'est-à-dire pour toutes les valeurs du moment d'inertie J entre Jmin et Jmax. La valeur de la marge de retard seuil MRc est prédéfinie.

Selon cette deuxième partie de l'algorithme 200, à l'étape 230, la valeur actuelle du paramètre To est multipliée par une constante supérieure à l'unité, par exemple 1,1. Compte tenu de cette nouvelle valeur du paramètre To, les étapes 201, 202 et 203 sont exécutées à nouveau pour déterminer la valeur des différents paramètres qui vont servir à l'étape 205 pour déterminer un nouveau correcteur C ; la valeur Ko conserve sa valeur précédente, elle n'est pas réaffectée dans cette étape. De manière schématique, l'algorithme 200 suit la ligne indiquée par le chiffre de référence 24. A l'issue de l'étape 205, l'algorithme 200 entre dans une boucle 240. La boucle 240 est similaire à la boucle 210 sauf qu'elle permet de calculer la marge de retard MR et de la comparer à la valeur de la marge de retard seuil MRc et ceci pour toutes les valeurs du moment d'inertie J entre la valeur minimum Jmin et la valeur maximum Jmax. A l'étape 241, la valeur minimum Jmin est associée à la valeur actuelle du moment d'inertie J. A l'étape 242, compte tenu du correcteur C calculé à l'étape 205 précédente, la marge de retard MR est calculée. A l'étape 243, cette valeur est comparée à la valeur seuil MRc. Si la marge de retard MR est inférieure à la valeur seuil MRc, le programme 200 est orienté en B vers l'étape 230. Une nouvelle valeur du paramètre To est calculée, les autres paramètres du correcteur sont mis à jour et un nouveau correcteur C est déterminé avant que l'algorithme ne revienne dans la boucle 240.

Si, à l'étape 243, la marge de retard MR est effectivement supérieure à MRc, la valeur actuelle du moment d'inertie J est augmentée d'une valeur Δj prédéfinie à l'étape 244. Puis, à l'étape 245, la nouvelle valeur du moment d'inertie J est comparée à la valeur maximale Jmax. Si J est différent de Jmax, l'étape 242 est exécutée à nouveau pour calculer la nouvelle valeur de la marge de retard MR. Cette boucle est exécutée tant que, à l'étape 245, le moment d'inertie J est inférieur au moment d'inertie maximum Jmax. Mais dès que J est égal à Jmax, l'algorithme 200 se termine, le correcteur C ainsi calculé étant un correcteur robuste pour la plage de moments d'inertie.

Incidemment, on montre que la deuxième partie de l'algorithme 200 ne modifie pas significativement les marges de module MM obtenues dans la première partie de ce même algorithme.

Puis, in situ, au cours de l'utilisation du simulateur de mouvements et à chaque fois qu'une nouvelle charge vient d'être montée sur le plateau, le procédé selon l'invention se poursuit par l'utilisation des paramètres du correcteur robuste pour définir un correcteur optimal à la nouvelle charge. Ce procédé est décomposable en trois étapes successives : une étape de test, une étape d'identification, puis une étape finale conduisant à la synthèse d'un correcteur optimal.

Au cours l'étape de test, on se trouve dans la configuration de la figure 5. Au cours de ce test qui est en boucle fermée, on réalise un mouvement de l'axe asservi par le correcteur robuste obtenu à l'issue de l'étape initiale dans le but de caractériser la charge inconnue portée par l'axe. Ce test consiste à réaliser un mouvement de l'axe suivant un profil de consigne de position prédéfini tel que celui représenté schématiquement sur la figure 6. Ce profil de consigne de position est conçu en fonction des contraintes en accélération, vitesse et position à ne pas dépasser pour ne pas détériorer la machine. D'autres profils de consigne sont possibles, mais il est néanmoins indispensable que la vitesse à laquelle se déroule le test atteigne un niveau suffisamment significatif de façon que les phénomènes non linéaires à base vitesse n'interviennent pas.

Afin que le signal de commande soit riche et possède un spectre aussi large que possible, une séquence binaire pseudo aléatoire (SBPA), indiquée en pointillés sur la figure 5, peut, en variante, être ajoutée au signal correspondant au profil de consigne. L'amplitude de la séquence binaire pseudo aléatoire est calibrée de telle sorte que ce signal ne mette pas en cause le sens de rotation du simulateur de mouvements et n'entraîne pas une violation des contraintes sur l'accélération la vitesse et la position de l'axe.

Au cours de cette étape de test, les données qui correspondent aux variables d'entrée (valeurs de la commande U) et de sortie (en l'occurrence la mesure de la position Y) sont mémorisées en fonction du temps.

Les données mémorisées subissent un prétraitement afin de les rendre utilisables à l'étape suivante d'identification. Pour un instant donné t, ce prétraitement consiste à dériver le signal de position mesurée Y afin d'extraire une mesure de la vitesse instantanée de l'axe du simulateur. Puis, si la vitesse mesurée est inférieure à une valeur seuil de vitesse, le prétraitement consiste alors à éliminer les données de commande U et de position mesurée Y associées à cet instant t. Ainsi, certains phénomènes non linéaires se produisant à basse vitesse, aussi appelés effet Stribeck, ne sont pas pris en compte.

Le procédé comporte ensuite une étape d'identification du système pour une charge spécifique. Plus précisément, cette étape d'identification permet de déterminer la valeur des paramètres d'une deuxième modélisation physique du système considéré (inertie, frottements, etc.) en exploitant des données enregistrées lors de l'étape de test.

La deuxième modélisation physique du système à asservir doit tenir compte des non linéarités affectant le système à asservir. Les frottements secs et/ou le balourd peuvent être modélisés. Le balourd est le déséquilibre, selon des axes qui ne sont pas verticaux, d'une pièce mécanique qui est dû au fait que son centre de gravité n'est pas sur l'axe de rotation. Ainsi, une modélisation non linéaire de l'axe peut s'écrire :

$$J\frac{d\Omega}{dt} = -f \cdot \Omega + \Gamma - Fs \cdot sign(\Omega) - d \cdot \sin(\theta + \varphi)$$

$$\frac{d\theta}{dt} = \Omega$$

Dans ce système d'équations, J est le moment d'inertie de l'ensemble du système, f un coefficient de frottements visqueux ; Fs le module de Coulomb des frottements secs ; d un couple de balourd (d est nul dans le cas d'un axe vertical) ; $\varphi$ l'angle de la droite reliant le centre de gravité de la charge à l'axe par rapport à la verticale.

Dans un système multiaxe d'autres forces peuvent intervenir de façon non linéaire comme, par exemple, les forces de Coriolis.

Le terme $Fs \cdot sign(\Omega)$ modélisant les frottements secs possède la propriété de ne pas être dérivable autour de zéro. Afin d'éviter les problèmes afférents à cette non dérivabilité dans l'étape d'identification, la consigne lors de l'étape d'essai est choisie de telle sorte que $sign(\Omega)$ soit constant (par exemple positif). Dans ces conditions, le modèle décrit précédemment devient :

$$J\frac{d\Omega}{dt} = -f \cdot \Omega + \Gamma - Fs - d \cdot \sin(\theta + \varphi)$$

$$\frac{d\theta}{dt} = \Omega$$

Les paramètres J et f de cette deuxième modélisation sont déterminés par identification en utilisant un algorithme de programmation non linéaire tel que l'algorithme de Levenberg-Marquardt par exemple.

Enfin, le procédé se termine par une étape de synthèse d'un correcteur optimal pour la charge effectivement embarquée. Ce correcteur est le plus performant possible au sens où il possède un temps de réponse en régulation faible (tout en conservant des marges de robustesse statique - marge de module- et/ou dynamique -marge de retard suffisantes).

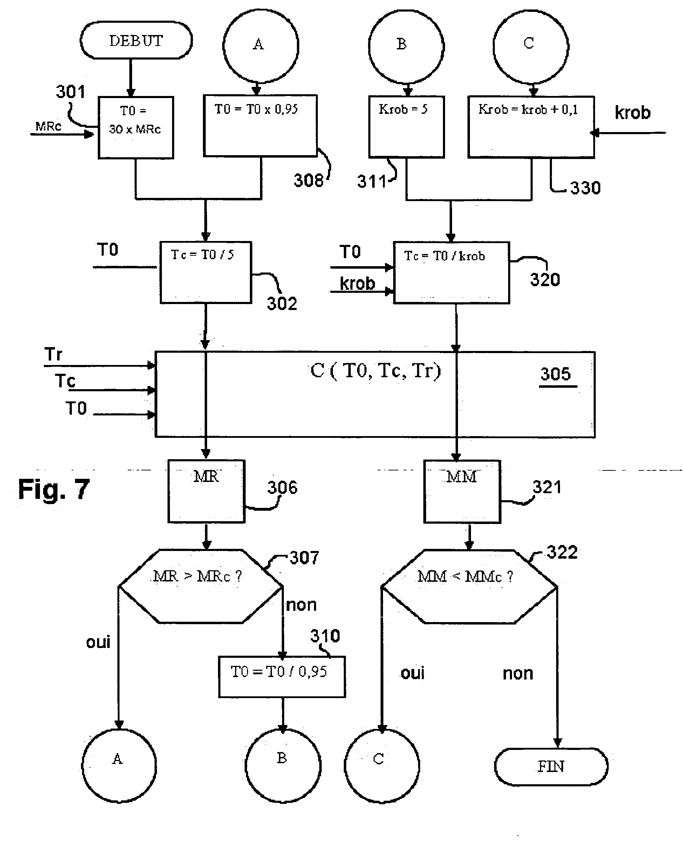

Comme dans l'étape initiale, lors de l'étape finale, la synthèse du correcteur optimal est réalisée selon la méthodologie dite du contrôle d'état standard en exécutant l'algorithme 300 de la figure 7. On détermine alors le correcteur optimal qui satisfait la marge de retard cible MRc, la marge de module cible MMc et le paramètre de réglage Tr. Pour cette étape finale, on utilise le moment d'inertie obtenu par identification lors de l'étape d'identification précédente.

L'algorithme 300 débute par l'étape 301 au cours de laquelle un multiple assez élevé de la valeur actuelle du paramètre MRc, par exemple 30 x MRc, est affectée à la valeur du paramètre To. L'algorithme se poursuit par l'étape 302, au cours de laquelle la valeur de To est divisée par cinq et le résultat est affecté au paramètre Tc. Puis, compte tenu des paramètres To, Tr et Tc actuels, l'étape 305 permet de déterminer le correcteur correspondant, au moyen de la méthodologie du contrôle d'état standard. Il est à noter que l'étape 305 est identique à l'étape 205 de l'algorithme 200 (figure 4) avec Ko fixé à la valeur unitaire. En sortie de l'étape 305, l'étape 306 est exécutée. Elle permet de calculer la marge de retard MR du correcteur obtenu. A l'étape 307, la valeur calculée de la marge de retard MR est comparée avec la marge de retard seuil MRc. Si la marge de retard MR est effectivement supérieure à MRc, l'algorithme 300 revient à l'étape 308 selon le chemin A. A l'étape 308, une nouvelle valeur du paramètre To est calculée. La nouvelle valeur de To est inférieure à la valeur précédente, et est obtenue en multipliant la valeur précédente de To par un paramètre inférieur à l'unité, en l'occurrence 0,95 par exemple. Puis l'étape 302 est une nouvelle fois exécutée. Compte tenu de la valeur des nouveaux paramètres, un nouveau correcteur C est calculé à l'étape 305. La boucle est exécutée tant que la condition 307 est vérifiée.

Lorsque MR est effectivement inférieur à la valeur seuil MRc, l'algorithme 300 sort et exécute l'étape 310 consistant simplement à affecter la valeur précédente à la valeur du paramètre To utilisée dans la dernière itération de la boucle. Ainsi, la valeur actuelle de To est divisée par 0,95 par exemple et le résultat est affecté comme nouvelle valeur de To.

Puis l'algorithme 300 en B est conduit à l'étape 311. La deuxième partie de l'algorithme 300 permet de déterminer le correcteur qui aura la marge de module MM la mieux adaptée. A l'étape 311, la variable Krob, qui est égale au rapport du paramètre To sur le paramètre Tc, prend la valeur 5 par exemple. Puis l'algorithme 300 se poursuit vers l'étape 320 où les valeurs du paramètre To et du paramètre Krob sont lues et la valeur de Tc est calculée en divisant To par Krob. Puis l'étape 305 est exécutée à nouveau, compte tenu de la valeur actuelle des différents paramètres. Un correcteur C est déterminé. A l'étape 321, le module de marge MM de ce nouveau correcteur C est calculé. A l'étape 322, la valeur de la marge de module MM obtenu est comparée avec la marge de module seuil MMc. Lorsque la marge de module MM est inférieure à MMc, l'algorithme 300 est dirigé vers l'étape 330 par le lien C. A l'étape 330 une nouvelle valeur est calculée pour la variable Krob, par exemple en augmentant Krob d'une valeur prédéterminée de 0,1 par exemple. Puis les étapes 320, 305, 321 sont à nouveau exécutées, compte tenu des nouvelles valeurs des différents paramètres. Puis, la condition 322 est encore une fois testée sur la valeur de la marge de module MM du nouveau correcteur C. La boucle C a lieu tant que la marge de module MM reste inférieure à la marge de module seuil MMc. Dès que la condition 322 n'est plus vérifiée, l'algorithme 300 se termine. A cet instant, l'algorithme 300 prend fin.

Un correcteur optimal à la charge actuellement disposée sur le plateau du simulateur de mouvements a été obtenu de manière automatique. Le procédé d'obtention d'un tel correcteur optimal est reproductible et permet d'obtenir un résultat qui soit fiable et qui soit le meilleur possible compte tenu des valeurs données aux paramètres de réglages lors de l'étape initiale. Des essais de mise en oeuvre du procédé selon l'invention montrent qu'il est possible de définir les paramètres du correcteur rapidement.

Bien que l'invention ait été décrite en référence à un mode de réalisation particulier, elle n'est nullement limitée à ce mode de réalisation. Elle comprend tous les équivalents techniques des moyens décrits ainsi que leurs combinaisons qui entrent dans le cadre de l'invention.

Plus particulièrement, le procédé selon l'invention s'applique au cas de dispositifs mécaniques permettant le mouvement du plateau en rotation selon un ou plusieurs axes, en translation selon un ou plusieurs axes ou la combinaison de mouvements de rotation et de translation. Dans un cas particulier donné, la modélisation de la partie mécanique à asservir et la ou les positions mesurées pour former la boucle d'asservissement seront choisies en fonction de ce cas. En particulier dans le cas d'un mouvement en translation, la masse de la charge sera le paramètre d'inertie à considérer, et non plus le moment d'inertie, paramètre d'inertie spécifique à une rotation.

**Revendications**

1.  Procédé de réglage mis en oeuvre dans un simulateur de mouvement pouvant embarquer une charge, ledit simulateur comportant un dispositif mécanique et une unité de contrôle, ledit dispositif mécanique comportant des moyens d'entraînement pour mettre en mouvement un plateau apte à porter ladite charge ; un amplificateur de courant apte à actionner lesdits moyens d'entraînement en réponse à un signal de commande ; un capteur apte à mesurer une position dudit plateau; et ladite unité de contrôle comportant un correcteur apte à émettre ledit signal de commande en fonction d'un signal de consigne de position et de ladite position mesurée,

    **caractérisé en ce qu'**il permet de régler automatiquement ledit correcteur pour asservir en position le mouvement dudit plateau embarquant une charge donnée, ledit procédé comportant :

    - une étape initiale de synthèse d'un correcteur robuste, ladite synthèse étant fondée sur une première modélisation physique du dispositif mécanique comportant au moins un paramètre d'inertie, ledit correcteur robuste obtenu permettant l'asservissement dudit dispositif mécanique sur une plage de valeur dudit paramètre d'inertie s'étendant entre un paramètre d'inertie minimum et un paramètre d'inertie maximum ; et, après avoir positionné ladite charge donnée sur ledit plateau,

    - une étape de test au cours de laquelle ledit dispositif mécanique, asservi au moyen dudit correcteur robuste déterminé lors de l'étape initiale, est actionné selon un profil de consigne de position prédéfini respectant des contraintes sur l'accélération, la vitesse et la position du mouvement, ledit signal de commande et ladite position mesurée étant mémorisés à chaque instant en tant que données de l'étape de test ;

    - une étape d'identification qui, à partir desdites données de l'étape de test, permet de déterminer la valeur d'une pluralité de paramètres physiques d'une deuxième modélisation dudit dispositif mécanique embarquant ladite charge donnée, ladite pluralité de paramètres physiques comportant au moins ledit paramètre d'inertie ; et,
- une étape finale de synthèse d'un correcteur optimal adapté à ladite charge donnée, dans laquelle le paramètre d'inertie prend la valeur du paramètre d'inertie déterminé lors de l'étape d'identification.

**2.** Procédé selon la revendication 1, **caractérisé en ce que** ledit dispositif mécanique est apte à mettre ledit plateau embarquant une charge au moins en translation le long d'un axe, ledit paramètre d'inertie étant alors une masse d'inertie.

**3.** Procédé selon la revendication 1, **caractérisé en ce que** ledit dispositif mécanique est apte à mettre ledit plateau embarquant une charge au moins en rotation autour d'un axe, ledit paramètre d'inertie étant alors un moment d'inertie.

**4.** Procédé selon l'une des revendications précédentes, **caractérisé en ce que**, lors de ladite étape initiale, le correcteur est dans une boucle d'asservissement fermée en position sur une simulation numérique du dispositif mécanique embarquant une charge ayant un paramètre d'inertie nominal dans ladite plage.

**5.** Procédé selon l'une des revendications précédentes, **caractérisé en ce que** les étapes de test, d'identification et finale sont exécutées à nouveau au moins à chaque changement de charge.

**6.** Procédé selon l'une des revendications précédentes, **caractérisé en ce que**, ladite première modélisation est une modélisation linéaire du comportement dynamique dudit dispositif mécanique.

**7.** Procédé selon l'une des revendications précédentes, **caractérisé en ce que** lesdits correcteurs robuste et optimal comportent un filtre de Kalman basé sur ladite première modélisation, ledit filtre de Kalman prenant, en entrée, le signal de commande, ladite position mesurée et ladite consigne de position pour générer, en sortie, un état estimé dudit dispositif mécanique, ledit état estimé étant appliqué en tant que signal de commande après avoir été multipliée par un vecteur.

**8.** Procédé selon la revendication 7, **caractérisé en ce que** ledit filtre de Kalman permet d'estimer les perturbations affectant ledit dispositif mécanique en les modélisant par un signal venant s'additionner au signal de commande à l'entrée dudit dispositif mécanique à asservir.

**9.** Procédé selon l'une des revendications précédentes, **caractérisé en ce que**, ladite synthèse desdits correcteurs robuste et optimal est faite au moyen d'une méthodologie dite de contrôle d'état standard.

**10.** Procédé selon l'une des revendications précédentes, **caractérisé en ce que** lesdits correcteurs robuste ou optimal comportent quatre paramètres de réglage scalaires de haut niveau.

**11.** Procédé selon la revendication 10, **caractérisé en ce que** ladite étape initiale comporte d'abord, en faisant varier un premier paramètre scalaire parmi lesdits paramètres scalaires, la recherche d'un correcteur ayant une marge de module inférieure à une marge de module seuil pour toutes les valeurs de moment d'inertie de ladite plage de moment d'inertie, puis, en faisant varier un autre paramètre scalaire, dit deuxième paramètre, parmi lesdits paramètres scalaires, la recherche d'un correcteur ayant une marge de retard inférieure à une marge de retard seuil pour toutes les valeurs de moment d'inertie de ladite plage de moment d'inertie.

**12.** Procédé la revendication 10 ou la revendication 11, **caractérisé en ce que**, la valeur du moment d'inertie ayant été identifiée, ladite étape finale comporte d'abord, en faisant varier ledit deuxième paramètre, la recherche d'un correcteur ayant une marge de retard supérieure à ladite marge de retard seuil, puis, en faisant varier encore un autre paramètre scalaire, dit troisième paramètre, parmi lesdits quatre paramètres scalaires, la recherche d'un correcteur optimal ayant une marge de module supérieure à ladite marge de module seuil.

**13.** Procédé selon l'une des revendications précédentes, **caractérisé en ce que**, lors de ladite étape d'identification, ladite deuxième modélisation est une modélisation linéaire du comportement dudit dispositif.

**14.** Procédé selon l'une des revendications 1 à 12, **caractérisé en ce que**, lors de ladite étape d'identification, ladite deuxième modélisation tient compte de manière explicite des forces conduisant à un comportement non linéaire dudit dispositif.

**15.** Procédé selon l'une des revendications précédentes, **caractérisé en ce qu'**il comporte, à l'issue de ladite étape

EP 1 894 067 B1

de test, une étape de prétraitement pour rejeter les données pour lesquelles la valeur correspondante de la vitesse dudit plateau est inférieure à une vitesse seuil.

16. Simulateur de mouvements apte à embarquer une charge, ledit simulateur de mouvements comportant un dispositif mécanique et une unité de contrôle, ledit simulateur comportant un plateau mobile apte à porter ladite charge ; des moyens d'entraînement apte à mettre en mouvement selon au moins un axe ledit plateau ; un amplificateur de courant apte à actionner les moyens d'entraînement en réponse à un signal de commande ; un capteur apte à mesurer une position dudit plateau ; l'unité de contrôle comportant un correcteur apte à émettre ledit signal de commande en fonction d'un signal de consigne de position et de ladite position mesurée, **caractérisé en ce que** ladite unité de contrôle est configurée pour mettre en oeuvre le procédé de réglage selon l'une quelconque des revendications 1 à 15 pour obtenir un correcteur optimal étant donnée une charge.

**Claims**

1. A tuning method to be implemented in a motion simulator able to embark a payload, said simulator including a mechanical device and a control unit, the mechanical device including driving means in order to move a plate capable of carrying the payload ; a current amplifier capable of actuating the driving means in response to a control signal ; a sensor capable of measuring a position of said plate; and said control unit including a corrector capable of transmitting the control signal relative to a position setting signal and to said measured position, **characterised in that** it enables an automatic tuning of said corrector for a position feedback control of the motion of said plate embarking a given payload, said method including:

   - an initial step consisting in the synthesis of a robust corrector, said synthesis being based on a first physical modelling of the mechanical device including one inertia parameter, said obtained robust corrector enabling to feedback control said mechanical device over a range of values of said inertia parameter extending between a minimum inertia parameter and a maximum inertia parameter; and, after having positioned said given payload on the plate;
   - a test step during which the mechanical device, controlled by means of said robust corrector determined during the initial step is actuated according to a predefined position setting profile complying with constraints on the acceleration, the speed and the position of the motion, said control signal and said measured position being stored continuously as data of the test step;
   - an identification step which, on the basis of the data of the test step, enables to determine the value of a plurality of physical parameters of a second modelling of the mechanical device embarking said given payload, said plurality of physical parameters including at least the inertia parameter; and,
   - a final step consisting in the synthesis of an optimal corrector adapted to said given payload, wherein the inertia parameter takes the value of the inertia parameter determined during the identification step.

2. A method according to claim 1, **characterised in that** said mechanical device is at least able to translate said plate embarking a payload along one axis, the inertia parameter being then a mass of inertia.

3. A method according to claim 1, **characterised in that** said mechanical device is at least able to rotate said plate embarking a payload around an axis, the inertia parameter being then a moment of inertia.

4. A method according to one of the previous claims, **characterised in that** during the initial step, the corrector is in a position closed feedback control loop on a digital simulation of the mechanical device embarking a payload having a nominal inertia parameter in said range.

5. A method according to one of the previous claims, **characterised in that** all the test, identification and final steps are carried out again at least each time the payload is changed.

6. A method according to one of the previous claims, **characterised in that**, the first modelling is a linear modelling of the dynamic behaviour of the mechanical device.

7. A method according to one of the previous claims, **characterised in that** said robust and optimal correctors include a Kalman filter based on said first modelling, said Kalman filter taking, as input, the control signal, said measured position and said position setting to generate, as output, an estimated state of said mechanical device, said estimated state being applied as a control signal after having been multiplied by a vector.

13

8. A method according to claim 7, **characterised in that** said Kalman filter enables to estimate the disturbances affecting said mechanical device by modelling them by a signal added to the control signal at the input of the mechanical device to be controlled.

9. A method according to one of the previous claims, **characterised in that** the synthesis of said robust and optimal correctors is preformed by means of a standard state control methodology.

10. A method according to one of the previous claims, **characterised in that** the robust or optimal correctors include four high-level scalar tuning parameters.

11. A method according to claim 10, **characterised in that** said initial step comprises first of all, while varying a first scalar parameter among the scalar parameters, looking for a corrector having a modulus margin lower than a threshold modulus margin for all the values of the moment of inertia of said range of moment of inertia, and then, while varying another scalar parameter among the scalar parameters, so-called the second parameter, looking for a corrector having a delay margin lower than a threshold delay margin for all the values of the moment of inertia of said range of moment of inertia.

12. A method according to claim 10 or claim 11, **characterised in that**, the value of the moment of inertia having been identified, said final step comprises first of all, while varying the second parameter, looking for a corrector having a delay margin greater than said threshold delay margin, and then, while varying still another scalar parameter among said four scalar parameters, so-called the third parameter, looking for an optimal corrector having a modulus margin greater than said threshold modulus margin.

13. A method according to one of the previous claims, **characterised in that** during the identification step, the second modelling is a linear modelling of the behaviour of the device.

14. A method according to one of the claims 1 to 12, **characterised in that**, during the identification step, the second modelling takes into account explicitly the forces leading to a non linear behaviour of the device.

15. A method according to one of the previous claims, **characterised in that** it includes, after completion of said test step, a pre-treatment step in order to reject the data for which the corresponding value of the speed of said plate is lower than a threshold speed.

16. A motion simulator capable of embarking a payload, said motion simulator including a mechanical device and a control unit, the simulator including a mobile plate capable of carrying said payload; driving means capable of putting said plate in motion according to at least one axis; a current amplifier capable of actuating the driving means in response to a control signal; a sensor capable of measuring a position of said plate; the control unit including a corrector capable of transmitting the control signal relative to a position setting signal and said measured position, **characterised in that** the control unit is configured to implement the tuning method according to any of the claims 1 to 15 to obtain an optimal corrector for a given payload.

**Patentansprüche**

1. Verfahren zum Einstellen, umgesetzt in einem Bewegungssimulator, welcher mit einer Last beladen sein kann, wobei der Simulator eine mechanische Vorrichtung und eine Steuereinheit umfasst, wobei die mechanische Vorrichtung Antriebsmittel umfasst, zum Bewegen einer Platte, die geeignet ist, die Last zu traten; einen Stromverstärker, der geeignet ist, die Antriebsmittel in Antwort auf ein Steuersignal zu betätigen; einen Sensor, der geeignet, ist, eine Position der Platte zu messen; und wobei die Steuereinheit einen Regler umfasst, der geeignet ist, das Steuersignal auszugeben, auf Grund eines Signals des Sollwerts der Position und der gemessenen Position, **dadurch gekennzeichnet, dass** es ermöglicht, automatisch den Regler einzustellen, zum Regeln, hinsichtlich der Position, der Bewegung der Platte, welche mit einer gegebenen Last beladen ist, wobei das Verfahren umfasst:

- einen ersten Schritt der Synthese eines robusten Reglers, wobei die Synthese auf einem ersten physikalischen Modell der mechanischen Vorrichtung beruht, welches wenigstens einen Trägheitsparameter umfasst, wobei der erhaltene robuste Regler das Regeln der mechanischen Vorrichtung in einem Bereich des werts des Trägheitsparameters ermöglicht, weicher von einem minimalen Trägheitsparameter bis zu einem maximalen Trägheitsparameter reicht; und, nachdem die gegebene Last auf der Platte positioniert worden ist,

- einen Schritt des Prüfens, wobei im Laufe desselben die mechanische Vorrichtung, welche mittels des robusten Reglers geregelt wird, der während des ersten Schritts bestimmt worden ist, entsprechend einem vorbestimmten Sollprofil der Position betätigt wird, wobei die Beschränkungen hinsichtlich der Beschleunigung, der Geschwindigkeit und der Position der Bewegung eingehalten werden, wobei das Steuersignal und die gemessene Position zu jedem Zeitpunkt gespeichert werden, als Daten des Schritts des Prüfens;
- einen Schritt des Identifizierens, welcher, ausgehend von den Daten des Schritts des Prüfens, ermöglicht, den Wert für mehrere physikalische Parameter eines zweiten Modells der mechanischen Vorrichtung zu bestimmen, welche mit der gegebenen Last beladen ist, wobei die mehreren physikalischen Parameter wenigstens den Trägheitsparameter umfassen; und
- einen letzten Schritt der Synthese eines optimalen Reglers, der an die gegebene Last angepasst ist, wobei der Trägheitsparameter den Wert des Trägheitsparameters annimmt, welcher während des Schritts des Identifizierens bestimmt

2. Verfahren nach Anspruch 1, **dadurch gekennzeichnet, dass** die mechanische Vorrichtung geeignet ist, die Platte, welche mit einer Last beladen ist, wenigstens in eine Translaticnsbewegung entlang einer Achse zu bringen, wobei der Trägheitsparameter eine träge Masse ist.

3. Verfahren nach Anspruch 1, **dadurch gekennzeichnet, dass** die mechanische Vorrichtung geeignet ist, die Platte, welche mit einer Last beladen ist, wenigstens in eine Rotationsbewegung um eine Achse zu bringen, wobei der Trägheitsparameter ein Trägheitsmoment ist.

4. Verfahren nach einem der vorhergehenden Ansprüche, **dadurch gekennzeichnet, dass**, während des ersten Schritts, der Regler sich in einer geschlossenen Schleife befindet, zum Regeln der Position in einer numerischen Simulation der mechanischen Vorrichtung, die mit einer Last beladen ist, mit einem nominalen Trägheitsparameter in dem Bereich.

5. Verfahren nach einem der vorhergehenden Ansprüche, **dadurch gekennzeichnet dass** der Schritt des Prüfens, der Schritt des Identifizierens und der letzte Schritt wenigstens bei jedem Ändern der Last erneut ausgeführt werden.

6. Verfahren nach einem der vorhergehenden Ansprüche, **dadurch gekennzeichnet, dass** das erste Modell ein lineares Modell des dynamischen Verhaltens der mechanischen Vorrichtung ist.

7. Verfahren nach einem der vorhergehenden Ansprüche, **dadurch gekennzeichnet, dass** der robuste Regler und der optimale Regler ein Kalman-Filter aufweisen, auf Basis des ersten Modells, wobei das Kaiman-Filter am Eingang das Steuersignal, die gemessene Position und den Sollwert der Position verwendet, um am Ausgang einen geschätzten Zustand der mechanischen Vorrichtung zu erzeugen, wobei der geschätzte Zustand als Steuersignal angelegt wird, nachdem er mit einem Vektor multipliziert worden ist.

8. Verfahren nach Anspruch 7, **dadurch gekennzeichnet, dass** das Kalman-Filter ermöglicht, die Störungen zu schätzen, welche auf die mechanische Vorrichtung wirken, durch Modellieren derselben durch ein Signal, addiert zu dem Steuersignal am Eingang der mechanischem Vorrichtung, die zu regeln ist.

9. Verfahren nach einem der vorhergehenden Ansprüche, **dadurch gekennzeichnet, dass** die Synthese des robusten Reglers und des optimalen Reglers mittels einer Methode erfolgt, genannt Standard State Control.

10. Verfahren nach einem der vorhergehenden Ansprüche, **dadurch gekennzeichnet, dass** der robuste Regler und der optimale Regler vier skalare Einsteliungsparameter auf hohem Niveau aufweisen.

11. Verfahren nach Anspruch 10, **dadurch gekennzeichnet, dass** der erste Schritt, zuerst, durch Verändern eines ersten skalaren Parameters der skalaren Parameter, das Ermitteln eines Reglers umfasst, welcher einen Module Margin aufweist, unterhalb eines Schwellenwerts eines Module Margin, für alle Werte des Trägheitsmoments in dem Bereich des Trägheitsmoments, und danach, durch Verändern eines weiteren skalaren Parameters, genannt zweiter Parameter, der skalaren Parameter, das Ermitteln eines Reglers, welcher einen Delay Margin aufweist, unterhalb eines Schwellenwerts eines Delay Margin, für alle Werte des Trägheitsmoments in dem Bereich des Trägheitsmoments.

12. Verfahren nach Anspruch 10 oder 11, **dadurch gekennzeichnet, dass**, wenn der Wert des Trägheitsmoments identifiziert worden ist, der letzte Schritt, zuerst durch Verändern des zweiten Parameters, das Ermitteln eines Reglers umfasst, weicher einen Delay Margin aufweist, oberhalb des Schwellenwerts des Delay Margin, und danach durch Verändern noch eines weiteren skalaren Parameters, genannt dritter Parameter, der vier skalaren Parameter, das Ermitteln eines optimalen Reglers, welcher einen Modul Margin aufweist, oberhalb des Schwellenwerts des Modul Margin.

13. Verfahren nach einem der vorhergehenden Ansprüche, **dadurch gekennzeichnet, dass**, während des Schritts des Identifizierens, das zweite Modell ein lineares Modell des Verhaltens der Verrichtung ist.

14. Verfahren nach einem der Ansprüche 1 bis 12, **dadurch gekennzeichnet, dass**, während des Schritts des Identifizierens, das zweite Modell auf explizite Weise Kräften Rechnung trägt, welche zu einem nichtlinearen Verhalten der Vorrichtung führen.

15. Verfahren nach einem der vorhergehenden Ansprüche, **dadurch gekennzeichnet, dass** es, am Ende des Schritts des Prüfens, einen Schritt des Vorverarbeitens umfasst, um jene Daten zu verwerfen, für welche der entsprechende Wert der Geschwindigkeit der Platte unterhalb einer Schwellengeschwindigkeit liegt.

16. Bewegungssimulator, welcher geeignet ist, mit einer Last beladen zu sein, wobei der Bewegungssimulator eine mechanische Vorrichtung und eine Steuereinheit umfasst, wobei der Simulator eine bewegliche Platte umfasst, die geeignet ist, die Last zu tragen; Antriebsmittel, die geeignet sind, die Platte entlang wenigstens einer Achse zu bewegen; einen Stromverstärker, der geeignet ist, die Antriebsmittel in Antwort auf ein Steuersignal zu betätigen; einen Sensor, der geeignet ist, eine Position der Platte zu messen; und wobei die Steuereinheit einen Regler umfasst, der geeignet ist, das Steuersignal auszugeben, auf Grund eines Signals des Sollwerts der Position und der gemessenen Position, **dadurch gekennzeichnet, dass** die Steuereinheit gestaltet ist, das Verfahren zum Einstellen nach einem der Ansprüche 1 bis 15 umzusetzen, um einen optimalen Regler bei einer gegebenen Last zu erhalten.

## Fig. 1

## Fig. 2
## ART ANTERIEUR

F

U

$$\dot{x} = A \cdot x + B \cdot U$$
$$y = C \cdot x$$

Y

10

$$\hat{\dot{x}}_f = A_f \cdot \hat{x}_f + B_f \cdot U + K_f \left( y_f - C_f \cdot \hat{x}_f \right)$$

-Kc

$x_f$

U

Y

$y_f$

11

r

12

## Fig. 3

SBPA

r

**C (T0, Tr, Tc, k0 )**
Correcteur
robuste

+

U

Axe de
charge
inconnue

Y

Mémorisation
des données

## Fig. 5

Position

Fig. 6

Temps

Fig. 4

**Fig. 7**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **Jouve et al.** *Autotuning of axis control systems for robots and machine tools IEEE,* 1991
- **Li et al.** *Modeling, simulation and control of a hydraulic Stewart platform,* 1997
- **M Philippe de Larminat.** contrôle d'état standard. HERMES, 2000